# EUROPÄISCHE PATENTANMELDUNG

(11) **EP 3 907 839 A1**
(43) Veröffentlichungstag der Anmeldung: **10.11.2021**
(21) Anmeldenummer: 20173093.4
(22) Anmeldetag: 06.05.2020
(51) Int. Cl.: H02B 13/035

(54) **EINE DURCHFÜHRUNG FÜR EINE LUFTISOLIERTE SCHALTANLAGE**

(71) Anmelder: Siemens Aktiengesellschaft, 80333 München (DE)
(72) Erfinder: Aykoc, Bidar, 63477 Maintal (DE); Patatas, Helder, 60388 Frankfurt am Main (DE)

(57) **Zusammenfassung**

Die Erfindung betrifft eine Durchführung (10) für eine luftisolierte Schaltanlage (1), eine Schaltanlage (1) mit einer solchen Durchführung (10) und ein Herstellungsverfahren für eine solche Durchführung (10).

Die Durchführung (10) weist wenigstens einen nichtleitenden Gusskörper (11) mit einer zu zwei Seiten des Gusskörpers (11) geöffneten Aussparung (12) für einen elektrischen Leiter (13), eine in dem Gusskörper (11) angeordnete Sensoranordnung (14, 15, 16), die ausgebildet ist, eine elektrische Messgröße des elektrischen Leiters (13) zu erfassen, und einen in einer Mantelfläche (17) des Gusskörpers (11) angeordneten Anschluss (18) auf. Erfindungsgemäß umfasst die Sensoranordnung (14, 15, 16) einen Spannungssensor (14) und/oder einen Stromsensor (15). Dabei ist der Spannungssensor (14) als resistiver Spannungssensor (14) ausgeführt und dazu ausgebildet, ein von einer in dem elektrischen Leiter (13) anliegenden Spannung abhängiges Spannungsmesssignal zu erzeugen und an den Anschluss (18) auszugeben. Der Stromsensor (15) ist dazu ausgebildet, ein von einem in dem elektrischen Leiter (13) fließenden Strom abhängiges Strommesssignal zu erzeugen und an Anschluss (18) auszugeben.

## Beschreibung

### Technisches Gebiet

Die Erfindung betrifft eine Durchführung für eine luftisolierte Schaltanlage, eine Schaltanlage mit einer solchen Durchführung und ein Herstellungsverfahren für eine solche Durchführung.

### Technischer Hintergrund

Luftisolierte Schaltanlagen werden für die Verteilung und das Schalten von Spannungen verwendet. Hierbei kommen meistens Spannungen im sogenannten Mittelspannungsbereich zur Anwendung, der von 1kV bis 52kV Volt reicht. Als luftisolierte Schaltanlagen werden solche Anlagen bezeichnet, bei denen die wesentlichen Komponenten von gewöhnlicher Luft umgeben sind, so dass es keiner Gasabdichtung bedarf. Nur der eigentliche Schaltvorgang selbst wird in Vakuumröhren ausgeführt, um die Entstehung von Lichtbögen während eines Schaltvorgangs möglichst zu unterdrücken.

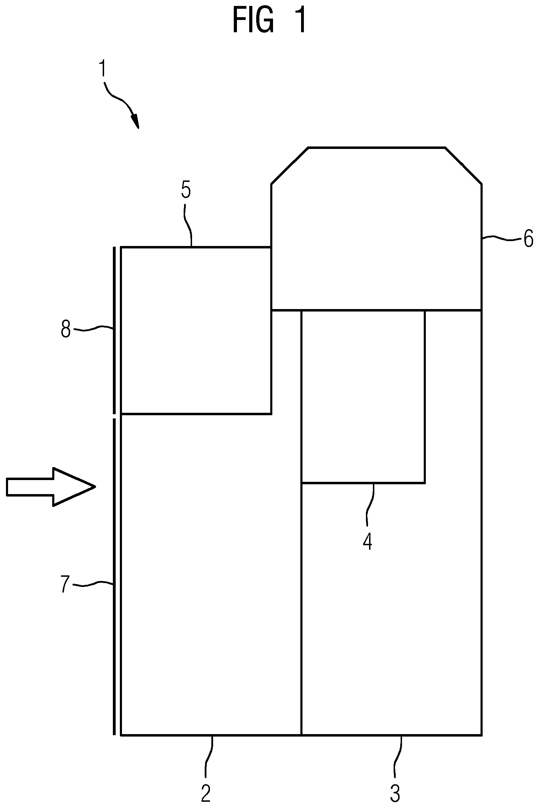

Fig. 1 zeigt eine typische luftisolierte Schaltanlage 1 in einer seitlichen Schnittzeichnung. Die Schaltanlage 1 besitzt üblicherweise vier verschiedene Räume, die voneinander abgetrennt sind. Ein Sammelschienenraum 4 beherbergt einen Satz von Sammelschienen (gewöhnlich eine Schiene pro Phase des Energienetzes), über die elektrische Energie zwischen mehreren nebeneinander angeordneten Schaltanlagen verteilt wird. Die jeweiligen Sammelschienenräume können dabei direkt miteinander verbunden sein und somit einen gemeinsamen Sammelschienenraum bilden oder voneinander abgetrennt sein.

Die in dem Sammelschienenraum 4 angeordneten Sammelschienen sind mit ersten Anschlüssen eines in einem Geräteraum 2 befindlichen Schaltgerätes verbunden, wobei beispielsweise sogenannte Kontakttulpen oder Fingerkontakte zur Bereitstellung von lösbaren Kontakten für eine einfache Austauschbarkeit des Schaltgerätes verwendet werden können. Als Schaltgerät können beispielsweise Leistungsschalter, Lastschalter, Kurzschließer, Erdungsschalter, Sicherungen und dergleichen mehr zum Einsatz kommen. Zweite Anschlüsse des Schaltgerätes sind in entsprechender Weise mit in einem Kabelanschlussraum 3 befindlichen Kabeln verbunden, die als Eingänge oder Ausgänge der von der Schaltanlage verteilten elektrischen Energie dienen können.

Ein Niederspannungsraum 5 kann Steuerelektronik, Mess- und Meldegeräte und andere derartige Niederspannungshilfsgeräte aufnehmen. Diese Niederspannungshilfsgeräte können Messwerte von den verschiedenen stromführenden und spannungstragenden Komponenten einlesen und für Steuer- und Schutzzwecke an entfernte Vorrichtungen weiterleiten und/oder lokal anzeigen und/oder automatisiert auswerten. Zur Bereitstellung solcher Messwerte werden üblicherweise an den Sammelschienen und den Kabeln befestigte Strom- und Spannungswandler vorgesehen, deren Messausgänge mit den Niederspannungshilfsgeräten verbunden sind.

Wartungspersonal kann auf den Geräteraum 2 und auf den Niederspannungsraum 5 durch jeweilige Zugangstüren 7 und 8 zugreifen. Die Räume 2, 3 und 4 sind mit einem Heißgaskanal 6 verbunden, der während einer Fehlfunktion wie einem Lichtbogen in der Schaltanlage entstehende heiße Gase aufnehmen, von dieser wegleiten und an einer für etwaiges in der Nähe befindliches Personal ungefährlichen Stelle in die Umgebung entlassen kann.

Zwischen dem Sammelschienenraum 4 und dem Schaltgeräteraum 2 einerseits und zwischen dem Schaltgeräteraum 2 und dem Kabelanschlussraum 3 andererseits sind Durchführungen vorgesehen, durch die die einzelnen elektrischen Leiter für die Verbindung der in den jeweiligen Räumen angeordneten Komponenten von einem Raum in den anderen führen.

Vor diesem Hintergrund macht es sich die Erfindung zur Aufgabe, einen besonders kostengünstigen Aufbau einer luftisolierten Schaltanlage zu ermöglichen.

### Zusammenfassung der Erfindung

Die Erfindung löst diese Aufgabe durch eine Durchführung für eine luftisolierte Schaltanlage gemäß Anspruch 1. Bevorzugte Ausführungsformen der Erfindung sind Gegenstand der Unteransprüche.

Ein erster Erfindungsaspekt betrifft eine Durchführung für eine luftisolierte Schaltanlage. Die Durchführung weist wenigstens einen nichtleitenden Gusskörper mit einer zu zwei Seiten des Gusskörpers geöffneten Aussparung für einen elektrischen Leiter, eine in dem Gusskörper angeordnete Sensoranordnung, die ausgebildet ist, eine elektrische Messgröße des elektrischen Leiters zu erfassen, und einen in einer Mantelfläche des Gusskörpers angeordneten Anschluss auf. Erfindungsgemäß umfasst die Sensoranordnung einen Spannungssensor und/oder einen Stromsensor. Dabei ist der Spannungssensor als resistiver Spannungssensor ausgeführt und dazu ausgebildet, ein von einer in dem elektrischen Leiter anliegenden Spannung abhängiges Spannungsmesssignal zu erzeugen und an den Anschluss auszugeben. Der Stromsensor ist dazu ausgebildet, ein von einem in dem elektrischen Leiter fließenden Strom abhängiges Strommesssignal zu erzeugen und an den Anschluss auszugeben. Die Aussparung öffnet sich dabei bevorzugt zu zwei einander gegenüberliegenden Seiten des Gusskörpers.

Die Erfindung besitzt den Vorteil, dass eine kostengünstig herstellbare Durchführung bereitgestellt wird, die bereits eine gewünschte Sensoranordnung enthält und so den Bauraum und die Kosten für eine eigene Messvorrichtung einspart. Dies ist auch deshalb vorteilhaft, weil Schaltanlagen im Bereich der Mittelspannung üblicherweise standardisierte Ausmaße besitzen, so dass der zur Verfügung stehende Bauraum begrenzt ist, andererseits aber angestrebt wird, eine möglichst hohe Leistungsdichte innerhalb der Schaltanlage zu erreichen, also möglichst hohe Spannungen und/oder Ströme zu schalten. Eine Erhöhung der Leistungsdichte erfordert jedoch üblicherweise größere Schutz- und Isolationsabstände innerhalb des gleichbleibenden standardisierten Raums der Schaltanlage. Ein weiterer Vorteil besteht darin, dass die Sensoranordnung, deren Messsignal auch von ihrer Fertigungs- beziehungsweise Montagetoleranzen unterworfenen Positionierung relativ zu dem elektrischen Leiter abhängt, bereits bei der Herstellung kalibriert werden kann. Bei separaten Sensoranordnungen, die innerhalb der Schaltanlage montiert werden, muss eine solche Kalibrierung nach der Montage erfolgen.

Vorzugsweise besitzt die erfindungsgemäße Durchführung einen in der Mantelfläche des Gusskörpers angeordneten Erdungskontakt. Der Erdungskontakt kann dazu dienen, ein Bezugspotential für die Sensoranordnung bereitzustellen. Besonders bevorzugt ist der Erdungskontakt als Aufnahme für ein Befestigungsmittel ausgebildet, beispielsweise als ein metallisches Schraubgewinde zur Aufnahme einer Gewindeschraube oder als ein Gewindeschaft zur Befestigung durch eine Mutter oder dergleichen.

Der Spannungssensor umfasst besonders bevorzugt einen ohmschen Teiler, der einen in der Aussparung angeordneten Messkontakt für das Kontaktieren des elektrischen Leiters besitzt. Ein ohmscher Teiler bietet ein wenigstens näherungsweise linear von der Spannung des elektrischen Leiters abhängiges Spannungsmesssignal und kann mit einfachen Mittel sehr genau kalibriert werden.

Die Sensoranordnung kann zusätzlich einen kapazitiven Spannungssensor umfassen, der durch den Gusskörper von der Aussparung für den elektrischen Leiter räumlich und elektrisch abgetrennt angeordnet ist. Der kapazitive Spannungssensor ist besonders dazu geeignet, ein binäres Signal bereitzustellen, das eine Information darüber enthält, ob der elektrische Leiter unter Spannung steht oder nicht. Für eine quantitative Messung der Spannung im Rahmen der Überwachung der Funktion der Schaltanlage ist er hingegen ungeeignet. Darüberhinaus besitzt der kapazitive Spannungssensor den Vorteil, dass er im Gegensatz zu dem resistiven Spannungssensor elektrisch isoliert von dem elektrischen Leiter angeordnet ist, so dass geringere Schutzanforderungen bei der Weiterverarbeitung des von ihm zur Verfügung gestellten Signals bestehen.

Besonders bevorzugt umfasst der Stromsensor eine Rogowski-Spule, welche um die Aussparung für den elektrischen Leiter herum angeordnet ist. Die Rogowski-Spule besitzt sehr gute Messeigenschaften und gibt ein wenigstens näherungsweise linear von dem in dem elektrischen Leiter fließenden Storm abhängiges Strommesssignal, das als elektrische Spannung ausgegeben wird. Die Rogowski-Spule besitzt zudem den Vorteil, dass sie elektrisch isoliert von dem elektrischen Leiter in dessen Magnetfeld angeordnet ist, so dass auch hier geringere Schutzanforderungen bei der Weiterverarbeitung des ausgegebenen Messsignals bestehen.

Bevorzugte Varianten der zuletzt genannten Ausführungsform der Erfindung besitzen einen von dem Gusskörper gehaltenen leitfähigen Zylinder, dessen Längsachse parallel zu einer Flächennormalen einer Erstreckungsebene der Rogowski-Spule ausgerichtet ist. Dabei unterteilt der Zylinder die Aussparung in zwei einander gegenüberliegende Teilaussparungen und ist ausgebildet, von den beiden Teilaussparungen aus elektrisch kontaktiert zu werden und einen zu der Durchführung gehörigen Teil des elektrischen Leiters zu bilden. Der leitfähige Zylinder kann hierbei auch flach, das heißt als Kreisscheibe, ausgestaltet sein. Die zylindrische Form des elektrischen Leiters in dem Bereich der Rogowski-Spule bewirkt eine rotationssymmetrische Form der Anordnung in diesem Bereich, die ein Strommesssignal besonders hoher Qualität gewährleistet.

Eine zweiter Aspekt der Erfindung betrifft eine luftisolierte Schaltanlage mit einem Gehäuse, das wenigstens einen Sammelschienenraum, einen Kabelanschlussraum und einen Geräteraum sowie Durchführungen zwischen dem Sammelschienenraum und dem Geräteraum und/oder zwischen dem Kabelanschlussraum und dem Geräteraum aufweist. Erfindungsgemäß ist wenigstens eine der Durchführungen gemäß dem vorhergehenden Erfindungsaspekt ausgeführt.

Ein weiterer Erfindungsaspekt führt ein Herstellungsverfahren für eine erfindungsgemäße Durchführung ein. Es umfasst wenigstens die folgenden Schritte:
-- Bereitstellen einer Gussform, die eine Form des Gusskörpers der Durchführung mit der Aussparung definiert;
-- Anordnen der Sensoranordnung und des Anschlusses in der Gussform;
-- Ausgießen eines verbleibenden Raumes der Gussform mit einem Gießharz;
-- Aushärten des Gießharzes in der Gussform; und
-- Entnehmen der Durchführung aus der Gussform.

Bei Ausführungsformen mit einem leitfähigen Zylinder kann vor dem Schritt des Ausgießens des verbleibenden Raumes der Gussform zudem ein Schritt des Anordnens des Zylinders in der Gussform erfolgen. Dieser Schritt kann insbesondere mit dem Schritt des Anordnens der Sensoranordnung und des Anschlusses zusammenfallen.

### Kurzbeschreibung der Figuren

Die Erfindung wird im folgenden anhand von Abbildungen von Ausführungsbeispielen näher erläutert.

Es zeigen:
- Fig. 1: eine typische luftisolierte Schaltanlage 1 in einer seitlichen Schnittzeichnung;
- Fig. 2: ein Ausführungsbeispiel einer erfindungsgemäßen Durchführung 10 in einer Seitenansicht;
- Fig. 3: eine erste Schnittzeichnung durch die Durchführung 10 entlang der in Fig. 2 angezeigten Linie I-I;
- Fig. 4: eine zweite Schnittzeichnung durch die Durchführung 10 entlang der in Fig. 3 angezeigten Linie II-II; und
- Fig. 5: eine perspektivische Ansicht des Ausführungsbeispiels der erfindungsgemäßen Durchführung.

### Ausführliche Figurenbeschreibung

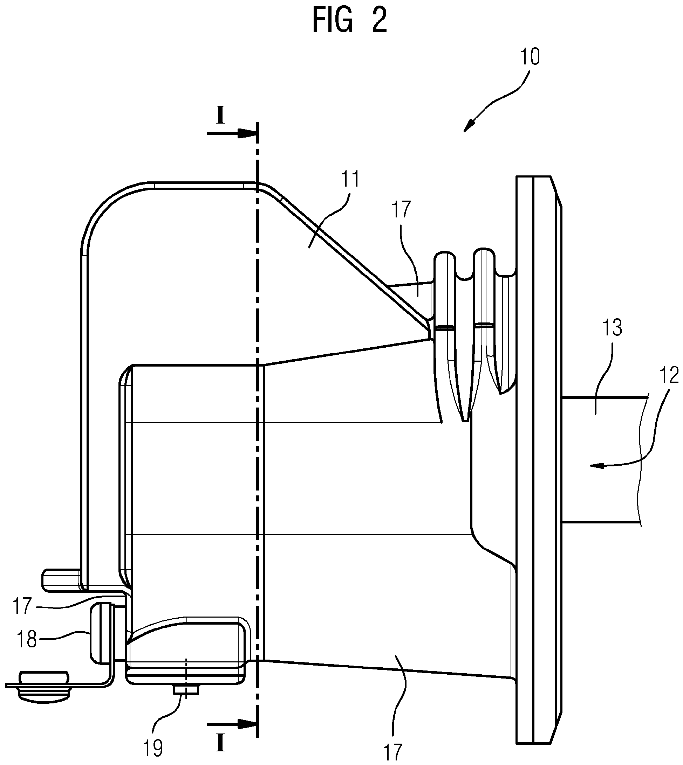

Fig. 2 zeigt ein Ausführungsbeispiel einer erfindungsgemäßen Durchführung 10 in einer Seitenansicht. Die Durchführung 10 wird bei bestimmungsgemäßem Gebrauch in einer Wand angeordnet, die den Geräteraum 2 von dem Kabelanschlussraum 3 oder dem Sammelschienenraum 4 der luftisolierten Schaltanlage 1 abtrennt, um die elektrische Kontaktierung zwischen dem im Geräteraum 2 angeordneten Gerät einerseits und den Sammelschienen beziehungsweise Kabeln andererseits zu ermöglichen.

Die Durchführung 10 besitzt einen Gusskörper 11 aus einem elektrisch nichtleitenden Material, der eine Aussparung 12 aufweist, durch die ein elektrischer Leiter 13 durchgeführt ist beziehungsweise werden kann. Der in Fig. 2 angedeutete Abschnitt des elektrischen Leiters 13 stellt selbst kein Teil der Durchführung 10 dar, allerdings kann die Durchführung 10 ein Teilstück des elektrischen Leiters umfassen, das beiderseitig von weiteren Teilstücken des elektrischen Leiters kontaktiert werden kann. Hierbei können insbesondere Schraubverbindungen verwendet werden.

Die Durchführung 10 besitzt eine Mantelfläche 17, die diejenigen Flächen der Durchführung 10 umfasst, die Außenflächen der Durchführung 10 darstellen. In einer dieser Außenflächen ist ein Anschluss 18 vorgesehen, über den von einer elektrischen Messgröße des elektrischen Leiters 13 abgeleitete Messsignale ausgegeben werden können. Die Messsignale können über ein an den Anschluss 18 anzuschließendes Signalkabel beispielsweise an ein im Niederspannungsraum 5 der luftisolierten Schaltanlage angeordnetes Steuergerät übertragen werden.

Die elektrische Messgröße oder die elektrischen Messgrößen können insbesondere eine an dem elektrischen Leiter 13 anliegende Spannung und/oder ein durch den elektrischen Leiter fließender Strom sein. Sie wird beziehungsweise werden durch eine im Inneren der Durchführung 10 angeordnete und in Fig. 2 nicht sichtbare Sensoranordnung erfasst.

Lediglich beispielhaft besitzt das Ausführungsbeispiel der erfindungsgemäßen Durchführung 10 einen Erdungskontakt 19, der beispielsweise als Schraubgewinde oder Gewindeschaft ausgeführt sein kann. Eine solche Ausführung des Erdungskontaktes 19 erleichtert es, die Durchführung an einer geerdeten Komponente des Gehäuses der luftisolierten Schaltanlage wie z.B. einer eine Trennwand verstärkenden Schiene zu fixieren, wodurch unmittelbar der Erdungskontakt 19 elektrisch mit Erdpotential verbunden wird. Der Erdungskontakt 19 hat dabei die messtechnische Aufgabe, ein festes Bezugspotential für einen Spannungssensor der Sensoranordnung zur Verfügung zu stellen.

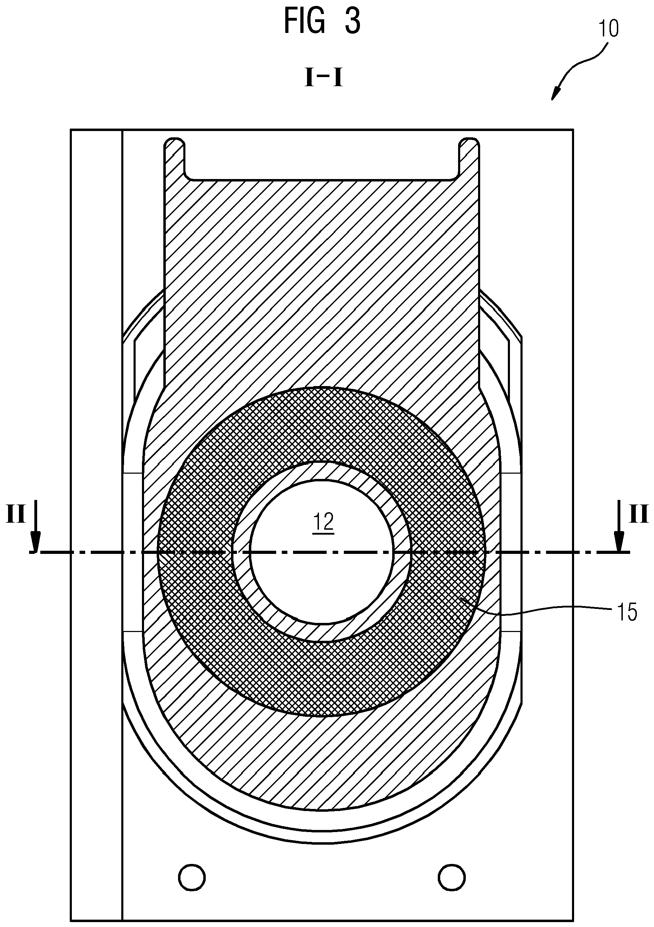

Fig. 3 zeigt eine erste Schnittzeichnung durch die Durchführung 10 entlang der in Fig. 2 angezeigten Linie I-I. Die Schnittlinie ist dabei so gewählt, dass sie durch einen Stromsensor 15 der Sensoranordnung im Inneren der Durchführung 10 verläuft. Der Stromsensor 15 ist vorliegend als Rogowski-Spule ausgeführt, die sich wenigstens näherungsweise kreisförmig um die in diesem Abschnitt der Durchführung ebenfalls kreisförmige Aussparung 12 herum erstreckt. Der kreissymmetrische Aufbau im Bereich des Stromsensors 15 bietet eine besonders hohe Messgenauigkeit der Strommessung. Die Strommessung mit einer Rogowski-Spule erfolgt galvanisch von dem elektrischen Leiter 13 (in Fig. 3 nicht dargestellt) isoliert in dem von dem Strom im elektrischen Leiter 13 erzeugten Magnetfeld.

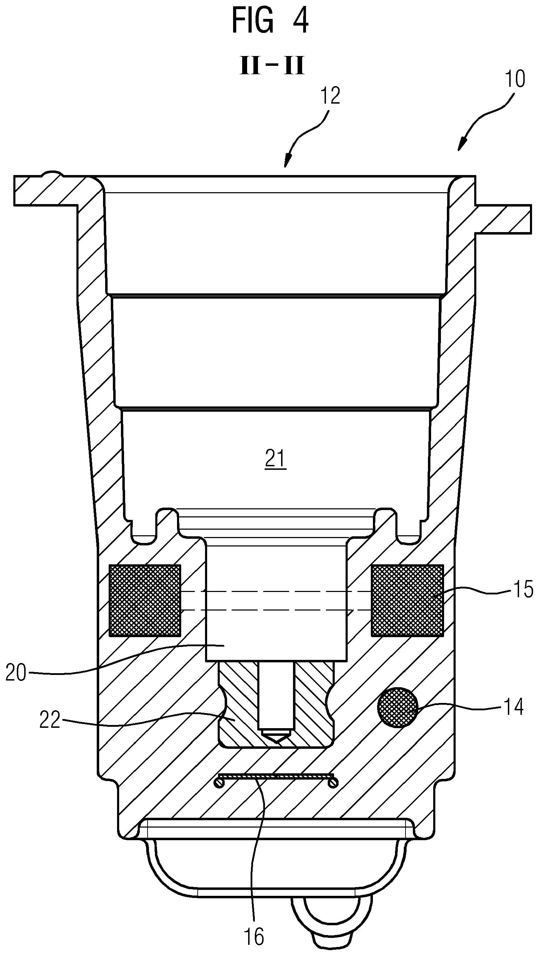

Fig. 4 zeigt eine zweite Schnittzeichnung durch die Durchführung 10 entlang der in Fig. 3 angezeigten Linie II-II. In der Fig. 4 ist zu erkennen, dass in dem gezeigten Ausführungsbeispiel der erfindungsgemäßen Durchführung 10 der in den Geräteraum 2 weisende Teil der Aussparung 12 trichterförmig ausgeführt ist, also einen sich zum Inneren der Durchführung 10 verkleinernden Durchmesser aufweist. Dieser Teil der Aussparung 12 ist zur Aufnahme einer sogenannten Kontakttulpe ausgebildet. Die Kontakttulpe wird bei der Kontaktierung des elektrischen Leiters 13 über ein zylindrisches oder mit einem Kugelkopf versehenes freies Ende des elektrischen Leiters 13 gefahren, woraufhin die Kontakttulpe den elektrischen Leiter durch Federkraft lösbar kontaktiert. Das freie Ende des elektrischen Leiters 13 kann mit einem Zylinder 20 verschraubt oder auf eine andere Art verbunden sein. Der Zylinder 20 umfasst ein leitfähiges Material und ist möglichst achsenparallel mit der Mittelachse der Rogowski-Spule 15 ausgerichtet, um einen Stromfluss im Wesentlichen parallel zu einer Flächennormalen einer Erstreckungsebene der Rogowski-Spule 15 sicherzustellen. Dadurch wird die Qualität der Strommessung gesteigert. Der Zylinder 20 wird vorzugsweise in dem Gusskörper 11 dergestalt eingegossen, dass er durch diesen räumlich fixiert wird, wodurch ein unveränderlicher Abstand zu der ebenfalls im Gusskörper 11 eingegossenen Rogowski-Spule 15 bewirkt wird. Der Zylinder 20 unterteilt auf diese Weise die Aussparung 12 in zwei Teilaussparungen 21 und 22, die auf gegenüberliegenden Seiten des Zylinders 20 angeordnet sind.

Das in Fig. 4 gezeigte Ausführungsbeispiel einer Durchführung 10 besitzt zusätzlich zu der Rogowski-Spule 15 auch einen resistiven Spannungssensor 14, der als hochohmiger Spannungsteiler ausgebildet ist und den elektrischen Leiter 13 elektrisch kontaktiert. Je nach Ausführungsform der Erfindung kann die Durchführung 10 jedoch auch nur entweder einen Stromsensor oder einen resistiven Spannungssensor aufweisen.

Bei allen Ausführungsformen der erfindungsgemäßen Durchführung 10 kann ein kapazitiver Spannungssensor 16 vorgesehen sein. Ein kapazitiver Spannungssensor 16 besitzt den Vorteil, dass er elektrisch von dem elektrischen Leiter 13 abgetrennt ist und er somit elektrisch von dessen hoher Spannung getrennt ist. Allerdings bietet er auch eine Spannungsmessung nur geringer Genauigkeit, so dass sein Ausgangssignal im wesentlichen Auskunft über das Anliegen einer Betriebsspannung am elektrischen Leiter 13 gibt und vornehmlich für eine Sicherheitsanzeige für Wartungspersonal oder Verriegelungsfunktionen zum Schutz gegen versehentliches Berühren des elektrischen Leiters 13 verwendet wird.

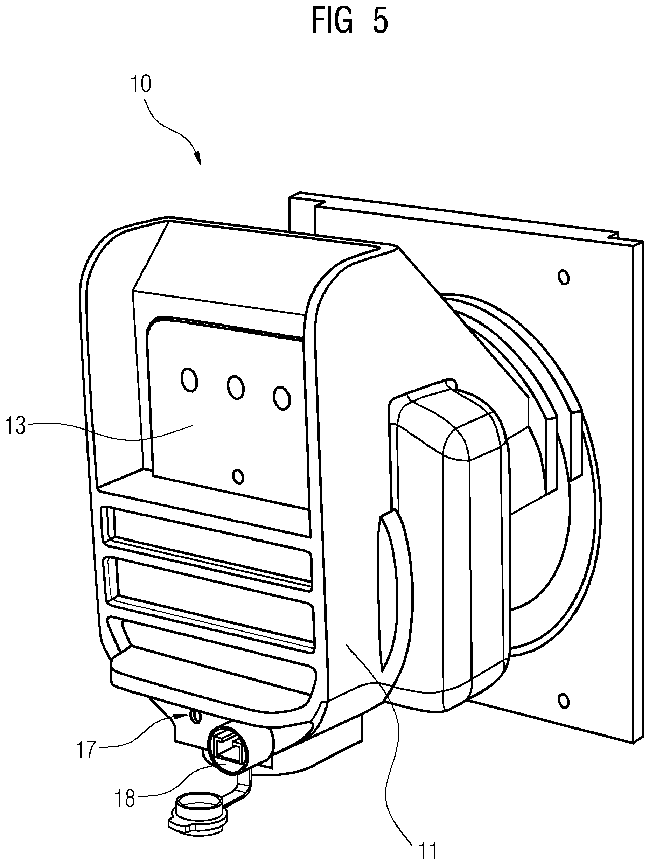

Fig. 5 zeigt eine perspektivische Ansicht des Ausführungsbeispiels der erfindungsgemäßen Durchführung. Aus der Fig. 5 wird ersichtlich, dass das in den Kabelanschlussraum 3 oder den Sammelschienenraum 4 weisende frei Ende des elektrischen Leiters 13 nicht in der Achse des Zylinders 20 von Fig. 4 liegt, sondern gegenüber dieser versetzt angeordnet ist. Das freie Ende ist dabei zur einfachen Kontaktierung mit Bohrungen, insbesondere Gewindebohrungen, versehen. Auf diese Weise kann ein Anschluss eines Kabels oder einer Sammelschiene einfach mit dem elektrischen Leiter 13 verbunden werden.

Die Erfindung wurde anhand von Abbildungen von Ausführungsbeispielen näher erläutert, soll jedoch nicht durch diese eingeschränkt sein, sondern wird ausschließlich durch die nachfolgenden Patentansprüche definiert.

### Bezugszeichenliste

- 1: luftisolierte Schaltanlage
- 2: Geräteraum
- 3: Kabelanschlussraum
- 4: Sammelschienenraum
- 5: Niederspannungsraum
- 6: Heißgaskanal
- 7, 8: Zugangstüren
- 10: Durchführung
- 11: Gusskörper
- 12: Aussparung
- 13: elektrischer Leiter
- 14: resistiver Spannungssensor
- 15: Stromsensor
- 16: kapazitiver Spannungssensor
- 17: Mantelfläche
- 18: Anschluss
- 19: Erdungskontakt
- 20: leitfähiger Zylinder
- 21, 22: Teilaussparungen

## Patentansprüche

1. Eine Durchführung (10) für eine luftisolierte Schaltanlage (1), die Durchführung (10) wenigstens aufweisend einen nichtleitenden Gusskörper (11) mit einer zu zwei Seiten des Gusskörpers (11) geöffneten Aussparung (12) für einen elektrischen Leiter (13), eine in dem Gusskörper (11) angeordnete Sensoranordnung (14, 15, 16), die ausgebildet ist, eine elektrische Messgröße des elektrischen Leiters (13) zu erfassen, und einen in einer Mantelfläche (17) des Gusskörpers (11) angeordneten Anschluss (18), **dadurch gekennzeichnet, dass** die Sensoranordnung (14, 15, 16) einen Spannungssensor (14) und/oder einen Stromsensor (15) umfasst, wobei der Spannungssensor (14) als resistiver Spannungssensor ausgeführt und dazu ausgebildet ist, ein von einer in dem elektrischen Leiter (13) anliegenden Spannung abhängiges Spannungsmesssignal zu erzeugen und an den Anschluss (18) auszugeben, und wobei der Stromsensor (15) dazu ausgebildet ist, ein von einem in dem elektrischen Leiter (13) fließenden Strom abhängiges Strommesssignal zu erzeugen und an den Anschluss (18) auszugeben.

2. Die Durchführung (10) des vorhergehenden Anspruchs, mit einem in der Mantelfläche (17) des Gusskörpers (11) angeordneten Erdungskontakt (19).

3. Die Durchführung (10) des vorhergehenden Anspruchs, bei der der Erdungskontakt (19) als Aufnahme für ein Befestigungsmittel ausgebildet ist.

4. Die Durchführung (10) eines der vorhergehenden Ansprüche, bei der der Spannungssensor (14) einen ohmschen Teiler umfasst, der einen in der Aussparung (12) angeordneten Messkontakt für das Kontaktieren des elektrischen Leiters (13) besitzt.

5. Die Durchführung (10) eines der vorhergehenden Ansprüche, bei der die Sensoranordnung (14, 15, 16) zusätzlich einen kapazitiven Spannungssensor (16) umfasst, der durch den Gusskörper (11) von der Aussparung (12) für den elektrischen Leiter (13) räumlich und elektrisch abgetrennt angeordnet ist.

6. Die Durchführung (10) eines der vorhergehenden Ansprüche, bei der der Stromsensor (15) eine Rogowski-Spule umfasst, welche um die Aussparung (12) für den elektrischen Leiter (13) herum angeordnet ist.

7. Die Durchführung (10) des vorhergehenden Anspruchs, mit einem von dem Gusskörper (11) gehaltenen leitfähigen Zylinder (20), dessen Längsachse parallel zu einer Flächennormalen einer Erstreckungsebene der Rogowski-Spule (15) ausgerichtet ist, wobei der Zylinder (20) die Aussparung in zwei einander gegenüberliegende Teilaussparungen (21, 22) unterteilt und ausgebildet ist, von den beiden Teilaussparungen (21, 22) aus elektrisch kontaktiert zu werden und einen zu der Durchführung (10) gehörigen Teil des elektrischen Leiters (13) zu bilden.

8. Eine luftisolierte Schaltanlage (1) mit einem Gehäuse, das wenigstens einen Sammelschienenraum (4), einen Kabelanschlussraum (3) und einen Geräteraum (2) sowie Durchführungen (10) zwischen dem Sammelschienenraum (4) und dem Geräteraum (2) und/oder zwischen dem Kabelanschlussraum (3) und dem Geräteraum (2) aufweist,
**dadurch gekennzeichnet, dass** wenigstens eine der Durchführungen (10) gemäß einem der vorhergehenden Ansprüche ausgeführt ist.

9. Ein Herstellungsverfahren für eine Durchführung (10) gemäß einem der Ansprüche 1 bis 7 mit den Schritten:
-- Bereitstellen einer Gussform, die eine Form des Gusskörpers (11) der Durchführung (10) mit der Aussparung (12) definiert;
-- Anordnen der Sensoranordnung (14, 15, 16) und des Anschlusses (18) in der Gussform;
-- Ausgießen eines verbleibenden Raumes der Gussform mit einem Gießharz;
-- Aushärten des Gießharzes in der Gussform; und
-- Entnehmen der Durchführung (10) aus der Gussform.
